# FASCICULE DE BREVET EUROPEEN

(11) **EP 2 014 460 B1**
(45) Date de publication et mention de la délivrance du brevet: **17.02.2010**
(21) Numéro de dépôt: 08290647.0
(22) Date de dépôt: 01.07.2008
(51) Int. Cl.: B32B 15/01, C23C 14/16, C25D 3/48, C25D 5/50, F01D 5/28

(54) **Procédé pour protéger la surface d'un substrat en alliage intermétallique à base d'aluminiure de titane contre la corrosion**
Verfahren zum Oberflächenschutz eines Substrats aus intermetallischer Verbindung auf Basis von Titan-Aluminid gegen Korrosion
Method for protecting the surface of an intermetallic alloy substrate with a titanium-aluminide base against corrosion

(30) Priorité: 09.07.2007 FR 0704957
(43) Date de publication de la demande: 14.01.2009
(73) Titulaire: ONERA (Office National d'Etudes et de Recherches Aérospatiales), 92320 Châtillon (FR)
(72) Inventeur: Bacos, Marie-Pierre, 92160 Antony (FR); Josso, Pierre, 92130 Issy les Moulineaux (FR)
(74) Mandataire: Bezault, Jean

(56) Documents cités:
- US-A- 4 137 370
- US-A- 5 129 574
- US-A- 5 879 760
- C. LEYENS, M. PETERS: "Titanium and titanium alloys : fundamentals and applications" 28 janvier 2005 (2005-01-28), WILEY-VCH VERLAG GMBH , XP002465915 ISBN: 9783527602117 * tableau 6.2 *

## Description

L'invention concerne un procédé pour la protection de la surface d'un substrat en alliage intermétallique à base d'aluminiure de titane contre la corrosion par l'oxygène, les composés soufrés et les composés halogénés. Elle concerne aussi les pièces protégées ainsi obtenues.

En raison de leur faible densité et de leurs bonnes propriétés mécaniques, les aluminiures de titane sont des candidats potentiels pour des applications à haute ou moyenne température, comme les turbines à gaz, embarquées ou non, en particulier les pièces de moteurs aéronautiques. On peut citer comme exemples les pales de turbine libre (température maximale d'utilisation de 800°C) et les diffuseurs de turbomachines (température maximale d'utilisation de 600°C).

Les aubes de turbine libre doivent être essentiellement résistantes à l'oxydation et à un environnement corrodant composé d'oxygène, de sulfate de sodium (Na₂SO₄) et d'un faible pourcentage de chlorure de sodium (NaCl). Les alliages destinés à cette application par les motoristes sont des alliages de fonderie ou des alliages forgés à haute fraction lamellaire et à haute résistance intrinsèque à l'oxydation de type TiAl G4 (développé par le Demandeur) ou un alliage à haute teneur en Niobium ("High content Niobium"), également développé par le demandeur.

Les pièces plus froides, telles que par exemple le diffuseur (T ₘₐₓ 600°C, T _{moyen} 450 - 500°C) situé avant la chambre de combustion mais touchant la veine gazeuse, doivent résister aux phénomènes de corrosion dus à un environnement sévère comme le brouillard salin, problème crucial pour les hélicoptères marins. Pour cette application, l'alliage retenu est un alliage classique Ti-48Al-2Cr-2Nb (% atomiques), encore appelé TiAl 48-2-2, et qui est un alliage essentiellement gamma.

Cependant, pour envisager de telles applications, il est nécessaire d'améliorer la résistance à l'oxydation et à la corrosion des aluminiures de titane, en particulier en milieu halogéné. En effet, les études de la corrosion des TiAl menées par le Demandeur montrent que, d'une part, il y a corrosion par le sulfate de sodium et que, d'autre part, cette corrosion est fortement aggravée par la présence de chlorure de sodium. Il ressort de ces études que le mécanisme de corrosion fait intervenir la formation d'un chlorure d'aluminium qui en s'oxydant forme du gaz chlorhydrique qui réagit à son tour avec l'aluminiure de titane pour reformer du chlorure d'aluminium qui s'oxydera par la suite. Le même phénomène a lieu avec le titane. Il s'agit donc d'une corrosion qui s'auto-entretient. Il a été constaté que ce type de corrosion intervient dès 600°C et est très pénalisant pour les pièces soumises, entre autres, aux embruns marins, telles les aubes haute pression du compresseur ou le diffuseur.

De plus, de manière générale, la résistance à l'oxydation des aluminiures de titane est médiocre à partir de 700°C, car, lors de l'oxydation, ces matériaux ne développent pas une couche d'alumine stable et étanche. Généralement la couche d'oxyde formée est complexe et composée de plusieurs strates : une couche superficielle d'oxyde de titane non stoechiométrique, une couche intermédiaire d'alumine et une couche interne composée d'un mélange alumine et oxyde de titane. Sous cette dernière couche complexe, on observe une sous-couche appauvrie en aluminium et parfois des nitrures de titane. Après plusieurs heures d'oxydation (300 - 500 heures), on observe une dissolution de la couche d'alumine dense qui précipite vers la couche externe sous forme d'îlots non continus entraînant un accroissement de la cinétique d'oxydation ; c'est la phase de rupture appelée « break away ». Le mécanisme par lequel l'ajout d'éléments en faible quantité permet de réduire la cinétique d'oxydation des TiAl est encore controversé.

Enfin, il est aussi important de constater que, si l'effet de l'oxygène à haute température sur la surface est relativement bien connu (oxydation), les effets de la corrosion en présence de phases condensables soufrées ou chlorurées sont nettement plus méconnus.

C'est à partir de ce constat que le demandeur s'est fixé pour but de protéger un tel alliage intermétallique à base d'aluminiure de titane.

Il est important de rappeler ici que l'invention n'est applicable qu'aux aluminiures de titane. On entend par aluminiure de titane un composé défini à base d'aluminium et de titane formant une phase intermédiaire qui n'existe qu'à l'état ordonné.

Parmi les trois phases possibles dans le diagramme binaire de l'aluminium et du titane, seuls deux composés sont industriellement utilisables : les alliages à base de γ-TiAl et ceux à base du composé α2-Ti₃Al. C'est à ces composés que cette invention est applicable.

En effet, à la différence des métaux purs ou de leurs alliages, la diffusion d'un tiers élément est fortement ralentie dans une phase ordonnée. Les alliages à base d'aluminiure de titane selon l'invention peuvent donc contenir, outre l'aluminium et l'alumine, d'autres composants métalliques, par exemple chrome, niobium, rhénium, etc., dans le but d'en améliorer les propriétés.

Le demandeur s'est proposé de protéger un tel alliage intermétallique grâce au dépôt d'un élément métallique qui, par diffusion, soit susceptible de modifier la composition chimique de l'alliage intermétallique TiAl sur une faible épaisseur et de former ainsi à sa surface un revêtement protecteur.

Les recherches du demandeur se sont confrontées à de nombreuses difficultés en pratique.

En effet, l'ensemble de l'analyse de la littérature met en évidence la difficulté de trouver un tel élément protecteur qui soit à la fois efficace, quel que soit l'environnement, et non pénalisant pour l'alliage en terme de propriétés mécaniques. Certains éléments (tel Nb) très positifs pour la résistance à l'oxydation vont diminuer fortement la résistance à la corrosion par les sulfates et les chlorures.

En partant de cette analyse, les auteurs ont souhaité explorer l'apport qu'un revêtement à base d'or, métal très résistant à la corrosion par l'oxygène, par le soufre et par les halogènes, pourrait apporter à la protection des aluminiures de titane.

À la connaissance du demandeur, la protection des aluminiures de titane par de l'or n'avait pas été explorée jusqu'à présent.

Cependant, on trouve de l'or dans la composition de certains alliages intermétalliques. Mais l'or y est ajouté surtout pour des raisons microstructurales (US 5.205.876) où sa concentration est comprise entre 0,01 et 0,05 % (masse). Toujours en terme de microstructure, US 5.368.660 enseigne que l'or peut être avantageusement utilisé pour réaliser des alliages biphasés de formule suivante :TiAl₂ + Ti_{(25 à 35 % poids)}Au_{(<5 % poids)}Al_{(60 à 70 % poids)}.

L'or est aussi utilisé en tant que brasure. Une feuille (ou un dépôt) d'or d'une épaisseur comprise entre 0,02 et 0,1 mm est insérée entre deux parties à assembler et l'ensemble est porté à la température d'environ 1400°C, ce qui permet d'obtenir une fusion eutectique du composé Au₁₆Ti₈₄ dont le point de fusion est de 1367°C (US 5.318.214).

Mais l'or est aussi utilisé en tant que barrière de diffusion dans certains systèmes composites TiAl + fibres SiC. En fait le terme de « barrière de diffusion » est impropre car, comme l'enseigne US 5.326.525, le métal noble (cuivre, argent ou or) est fondu puis diffuse dans la matrice d'aluminiure de titane pour former *in fine* un alliage à faible teneur de cet élément.

Une technique intéressante est décrite dans US 5.879.760. Elle consiste à appliquer un alliage de titane de type bêta sur un aluminiure de titane (*α2* ou *γ*) renforcé ou non par des fibres. Le dépôt de l'alliage ductile, épais de 25 à 100 µm, peut être fait par soudage diffusion ou par projection plasma sous pression réduite. Cette dernière couche est alors revêtue par un dépôt de métal noble tel que le ruthénium, rhodium, palladium, osmium, iridium, or et platine ou par un dépôt de tungstène suivi par un dépôt de ruthénium, rhodium, palladium, osmium, iridium, or et platine. L'épaisseur du métal noble est comprise entre 0,5 et 1,5 µm. Le métal noble préféré est un alliage de platine à 20 % de rhodium. Il est évident, quoique cela ne soit pas revendiqué, que l'alliage noble diffuse en cours de service dans la couche d'alliage ductile. Le rapport d'épaisseur entre les deux couches du revêtement (i.e. alliage titane ductile + métal noble) indique qu'il n'est nullement recherché une phase protectrice particulière.

Dans l'art antérieur pris en compte par cette invention, on notera particulièrement deux mémoires déposés par Fujishiro et al. (US 4.137.370 et US 4.181.590) où il est enseigné que l'on peut déposer à la surface d'un composé à base de titane entre 0,5 et 1,5 µm d'or pour améliorer à la fois ses propriétés mécaniques et ses propriétés en oxydation à température élevée.

Ces trois derniers brevets appliquent un dépôt d'or à la surface d'un alliage à base de titane et non pas sur un alliage intermétallique au sens d'un composé défini formant une phase ordonnée, comme on l'a mentionné plus haut.

La lecture du diagramme binaire or - titane montre que le métal noble peut être dissous dans une matrice de titane jusqu'à concurrence de 25 % en concentration atomique, soit 60 % en masse. Au-delà de cette limite, des composés définis tels que Ti₃Au, TiAu, TiAu₃ et TiAu₄, sont formés. Ceci revient à dire que si l'on appliquait un dépôt d'or sur un alliage de titane faiblement allié, de type TA6V, il y aurait, en service, interdiffusion entre le substrat et le revêtement, si bien que l'effet de protection recherché ne pourrait être obtenu.

En revanche, la littérature traitant de la protection ou de la tenue à l'environnement d'alliages enrichis en argent est relativement abondante. Il est noté dans cette littérature que l'argent ne peut être un revêtement protecteur universel car s'il améliore bien la tenue à l'oxydation haute température (jusqu'à 800°C) ses propriétés en corrosion, en particulier en présence de soufre, sont largement insuffisantes comme le démontrent T. Izumi et al. dans « Sulfidation properties of TiAl ± 2 at.% X (X=V, Fe, Co, Cu, Nb, Mo, Ag and W) alloys at 1173 K and 1.3 Pa sulfur pressure in an H2S-H2 gas mixture » (Intermetallics 8 (2000) 891-901). De plus, comme le notent L. Niewolak et al. dans « Oxidation behaviour of Ag-containing TiAl-based intermetallics » (Intermetallics 12 (2004) 1387-1396) la solubilité maximale de l'argent dans un alliage TiAl est au maximum de 4,8 % atomique et cette solubilité décroît avec la teneur en aluminium de l'alliage intermétallique. Inversement on peut dire que si la teneur en aluminium décroît fortement, comme dans les alliages de titane ductiles où elle est inférieure à 6 % atomiques, on augmente la solubilité de cet élément. Dès lors un dépôt de l'ordre de 1 à 2 µm à la surface d'un dépôt d'alliage de titane à faible teneur en aluminium 50 fois plus épais entraînera la dissolution totale de l'élément noble au cours du service. Or l'argent et l'or sont des éléments chimiquement très proches (colonne IB de la Classification Périodique des éléments). Dès lors on peut conclure qu'un faible dépôt d'or à la surface d'un alliage de titane à faible teneur en aluminium entraînera la disparition de cet élément au cours du service.

Ainsi, rien dans la technique antérieure ne pouvait enseigner, ni suggérer à l'homme du métier d'utiliser un revêtement d'or pour protéger contre la corrosion un substrat en alliage intermétallique à base d'aluminiure de titane.

Sous un premier aspect, l'invention propose un procédé pour protéger la surface d'un substrat en alliage intermétallique à base d'aluminiure de titane contre la corrosion, qui comprend les opérations suivantes :
a) préparer un substrat formé dudit alliage intermétallique ;
b) déposer un revêtement d'or sur la surface à protéger du substrat ; et
c) soumettre le substrat ainsi muni du revêtement d'or à un recuit dans des conditions contrôlées pour provoquer une diffusion limitée de l'or dans la surface à protéger.

Un tel revêtement à base d'or présente l'avantage de pouvoir être facilement déposé par des techniques conventionnelles, notamment par voie électrolytique. Toutefois d'autres techniques de dépôt sont envisageables, comme dépôt en phase vapeur, peinture, collage à la feuille, etc. De plus, le recuit de diffusion permet d'obtenir en surface une composition fortement enrichie en or, de composition TiAlAu₃, dont la diffusion ultérieure avec l'alliage intermétallique TiAl sera limitée et contrôlée.

Il convient de rappeler ici que l'or peut être soumis à différents types de corrosion.

En effet, en service à partir de 600°C, ce matériau est soumis à trois types de corrosion. La première, la plus connue, est une oxydation qui se fait en quatre étapes, I, II, III et IV. Au cours des étapes I et II, la cinétique observée suit une loi linéaire. Cette loi est généralement attribuée à la formation d'un film d'oxyde non protecteur et discontinu si bien que l'oxygène le traverse. Au cours de l'étape III, on observe une loi parabolique caractéristique d'un film d'oxyde fin, continu et protecteur dont la croissance est régie par des mécanismes de diffusion du métal ou de l'oxygène à travers l'oxyde. La vitesse de la réaction diminue au fur et à mesure que la couche d'oxyde formée augmente, sans toutefois l'annuler. Enfin l'étape IV, dite de rupture ou « break away », correspond à une rupture de ce film continu conduisant rapidement à la détérioration du matériau.

Le deuxième mode de dégradation est une corrosion par les sulfures. Dans l'application précitée aux pièces de moteurs aéronautiques, cette corrosion n'intervient qu'en aval de la chambre de combustion où le sulfate de sodium est formé par combinaison du chlorure de sodium de l'atmosphère avec le dioxyde de soufre formé par oxydation des composés soufrés contenus dans le kérosène. Cette corrosion intervient au-delà de 700°C pour devenir extrêmement nocive lorsque la phase condensée (sulfate de sodium et de potassium) devient liquide.

Enfin, le troisième mode de dégradation constaté a été étudié très récemment, entre autres par J.R. Nicholls et al. dans : « Hot salt corrosion of titanium aluminides » (Materials and corrosion, 48, 1997, 54-64) ou par Z. Yao et al. dans « NaCl-incluced hot corrosion of a titanium aluminide alloy » (Materials Science and Engineering 92/193, 1995, 994-1000). Ces résultats ont été confirmés et complétés par les propres études en corrosion menées par les présents inventeurs. Il ressort de ces études que le mécanisme de corrosion fait intervenir la formation d'un chlorure d'aluminium qui en s'oxydant forme du gaz chlorhydrique qui réagit à son tour avec l'aluminiure de titane pour reformer du chlorure d'aluminium qui s'oxydera par la suite. Le même phénomène a lieu avec le titane. Ce type de corrosion intervient dès 600°C et est très pénalisant pour les pièces soumises, entre autres, aux embruns marins, telles les aubes haute pression du compresseur ou le diffuseur.

Pour pouvoir être utilisé, un revêtement protecteur doit permettre de lutter contre ces trois types de dégradation. De plus, le revêtement, une fois créé, doit rester en surface et ne pas diffuser dans le substrat et inversement, le substrat doit diffuser le moins possible dans le revêtement. Comme déjà mentionné, les éléments de la colonne IB de classification périodique des éléments sont peu solubles dans les aluminiures de titane. Or, si le cuivre et l'argent sont assez peu protecteurs vis-à-vis des éléments tels que l'oxygène, le soufre et les halogènes, l'or, quant à lui, est réputé pour sa grande passivité vis-à-vis des ces éléments.

C'est pourquoi les présents inventeurs ont décidé de tester cet élément en tant que revêtement protecteur des aluminiures de titane tant en oxydation qu'en corrosion. La solution a été testée à l'aide d'un dispositif très sévère mis au point par le demandeur : les échantillons sont introduits dans une armoire saline pendant 16 heures. On y pulvérise un brouillard à partir d'une solution de 50 g/l de chlorure de sodium. Les échantillons sont ensuite pesés et soumis à une température de 600°C pendant 6 heures dans un four sous air. L'ensemble de ces manipulations correspond à un cycle de corrosion répété jusqu'à détérioration totale de la pièce (10 cycles maximum étant donné la sévérité du test). À partir de là, les courbes de corrosion sont tracées en éliminant la quantité de sel ajouté à chaque cycle. Ce test est complété par une vérification classique de la durée de vie de la pièce protégée tant en oxydation cyclique qu'en corrosion cyclique à chaud en présence de phases condensées (sulfates, chlorures etc..).

Le métal ou l'alliage candidat au rôle de revêtement devra en oxydation soit ne pas former d'oxydes entre la température ambiante et 800°C, température maximale d'utilisation des aluminiures de titane soit, en former de très stables. En corrosion à chaud en présence de phases condensées le métal ou l'alliage candidat ne devra pas former ni des sulfures ni des hyposulfites, ni des sulfites ou sulfates. Enfin, en présence d'halogènes tels que le chlore ou le fluor, le métal ou l'alliage ne devra pas former de sels volatils ou instables. Dès lors, cette définition ne peut s'appliquer qu'à un métal noble tels que le platine, l'iridium, l'or, et dans une moindre mesure, le rhodium et le palladium. Enfin une dernière condition sera exigée du métal ou de l'alliage candidat : interdiffuser le moins possible avec le substrat d'une part afin de ne pas affaiblir ses propriétés mécaniques et, d'autre part, pour conserver la composition chimique initiale du revêtement.

Peu de métaux ou alliages répondent à ces critères. In fine, seul l'or a semblé correspondre à ces conditions. En effet, il ne forme pas d'oxydes stables entre la température ambiante et 800°C (ΔG formation Au₂O₃ à 800°C = + 44 kcal/mole O_{2 gaz}), il ne forme pas de sulfures volatils (ΔG formation AuS gaz à 800°C = + 22 kcal/mole H₂S gaz) et il ne forme pas d'halogénures volatils (seul AuCl gaz est susceptible de se former mais avec un ΔG de formation de + 37 kcal/mole HCl _{gaz}). Ces chiffres sont à comparer avec celui concernant l'aluminium ΔG formation de AlCl3 gaz = -18 kcal/mole HCl _{gaz} , enthalpie négative donc la réaction est spontanée.

Avant de réaliser le dépôt du revêtement d'or, il convient d'abord de traiter au préalable la surface à protéger. L'opération de préparation a) est effectuée de préférence selon des techniques en soi connues. Elle comprend avantageusement un pré-traitement de la surface à protéger par un sablage, puis un traitement, au moins une attaque acide, suivi d'un rinçage.

De manière préférentielle, l'opération de dépôt b) est réalisée par voie électrolytique à partir d'un bain de dorage. On utilise avantageusement à cet effet, un bain de dorage comprenant une solution de sulfite de sodium contenant de l'or métallique. Cependant d'autres techniques de dépôt sont envisageables : dépôt en phase vapeur, peinture, collage à la feuille, etc.

Cette opération de dépôt b) est réalisée dans des conditions telles que le revêtement d'or présente une épaisseur d'au moins 2,5 µm, de préférence comprise entre 20 et 40 µm. Il n'y a pas de limite supérieure déterminante pour l'épaisseur du dépôt d'or, si ce n'est des raisons de coût.

L'opération de recuit c) est de préférence effectuée à haute température et sous pression réduite pour former des phases TiAlAu3, TiAlAu2 et TiAlAu.

L'opération de recuit c) est effectuée à une température comprise entre 850 et 1050°C, de préférence d'environ 900 °C et sous un vide meilleur que 10⁻³ Pa.

À la suite de ce recuit, le procédé de l'invention peut comprendre une opération supplémentaire consistant à :
d) déposer sur le revêtement d'or formant sous-couche un revêtement additionnel d'un autre matériau pour servir de protection contre l'érosion.

Cet autre matériau peut être un métal tel que l'or pur ou un autre métal ne formant pas d'oxydes, ni de sulfures ou d'halogénures, comme le platine, le palladium, l'osmium, le rhodium, l'iridium et le ruthénium. Cet autre matériau peut être aussi une céramique à base d'oxydes, de carbures, ou de nitrures, comme bien connu de l'homme de l'art.

Le procédé de l'invention peut comprendre une opération ultérieure consistant à effectuer un nouveau recuit sous vide pour régénérer le revêtement d'or en cas de corrosion halogénée.

Cette corrosion halogénée se traduit par une déplétion par élimination des halogénures volatils tels que AlCl₃ ou AlF₃, TiCl₄ ou TiF₄.

Sous un autre aspect, l'invention concerne une pièce comportant un substrat en alliage intermétallique à base d'aluminiure de titane dont une surface a été protégée contre la corrosion par un procédé tel que défini ci-dessus. Une telle pièce est destinée avant tout à une turbine à gaz, en particulier un moteur aéronautique.

Dans la description détaillée qui suit, donnée seulement à titre d'exemple, on se réfère aux dessins annexés, sur lesquels :
la figure 1 est une coupe micrographique, obtenue par observation avec un microscope à rétrodiffusion d'électrons, d'un échantillon comportant un revêtement de 20 µm d'or déposé sur un substrat de TiAl, sans recuit ;
la figure 2 est une coupe micrographique analogue d'un échantillon comportant un revêtement de 40 µm d'or déposé sur un substrat de TiAl, avec recuit ; et
la figure 3 est un diagramme représentant les variations du pourcentage d'allongement en fonction du temps (en heures) pour trois états différents d'un alliage intermétallique à base de TiAl.

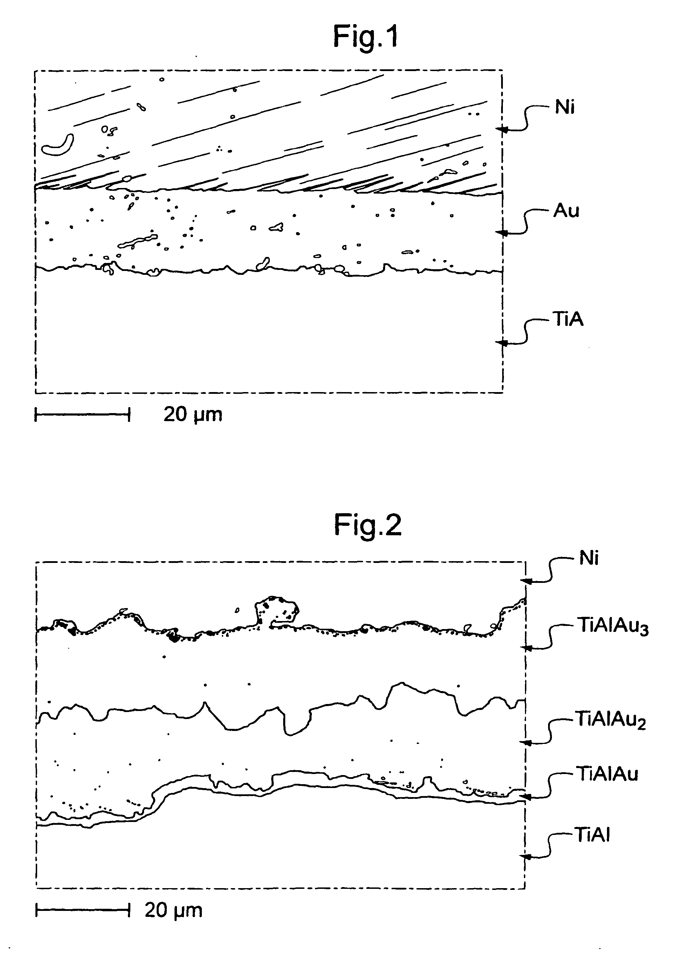

Sur la figure 1, on voit qu'un substrat 1 formé d'un alliage intermétallique à base de TiAl est muni d'un revêtement d'or 2, brut de dépôt, d'une épaisseur régulière de 20 µm. Ce dépôt d'or a été réalisé par électrolyse d'une solution de ce métal. Sur le revêtement d'or 2 a été déposé un enrobage de nickel 3 par voie électrolytique, uniquement pour faciliter l'observation de l'échantillon au microscope électronique. Dans ce cas particulier l'échantillon n'a pas subi de recuit.

Dans le cas de la figure 2, un revêtement d'or 2 d'une épaisseur de 40 µm a été déposé sur le substrat 1 et un recuit a été ensuite effectué à 900°C dans un four sous un vide meilleur que 10⁻³ Pa. Comme dans le cas précédent un enrobage de nickel 3 a été effectué pour faciliter l'observation.

L'échantillon montré à la figure 2 présente une microstructure à trois phases successives : TiAlAu, TiAlAu₂ et TiAlAu₃, en partant de la surface du substrat vers l'enrobage de nickel. Cette microstructure est intéressante car elle montre une certaine similitude avec le diagramme ternaire TiAl(Ni, Cu) où les phases TiAlAu₃ seraient l'équivalent de la phase τ4, TiAlAu₂ de la phase τ3 et TiAlAu de la phase τ2, confirmant ainsi la faible solubilité de l'or dans l'aluminiure de titane comme cela a été démontré par le demandeur dans FR 2.857.892.

Le revêtement a montré de bonnes propriétés tant en oxydation qu'en corrosion soufrée ou chlorée.

L'invention est illustrée en outre par les exemples suivants.

### Exemple I

Un alliage d'aluminiure de titane de composition classique Ti-48A1-2Cr-2Nb (% atomiques ; cet alliage est encore appelé TiAl 48-2-2) est revêtu d'or selon la procédure suivante :
- Sablage liquide à 3 bars,
- Rinçage à l'eau déminéralisée,
- Attaque HF(10%)/HNO3(30%),
- Rinçage à l'eau déminéralisée,
- Attaque HCl (30%),
- Rinçage à l'eau déminéralisée,
- Nickel de Wood 2min30 en cathode,
- Rinçage à l'eau déminéralisée,
- Mise au bain d'or sous tension.

Les opérations de préparation ou de traitement qui précèdent l'opération de dépôt sont classiques. Elles ont pour but de préparer la surface du substrat pour le dorage. Le sablage s'effectue en milieu humide pour faciliter l'élimination du sable et limiter l'abrasion de la surface. Les attaques acides sont également classiques. L'application de nickel de Wood évite la passivation du substrat.

Le bain de dorage électrolytique utilisé est complètement exempt de cyanure. Il se compose ainsi :

| | |
|---|---|
| Concentration en or métal | 10 g/L |
| Sulfite de potassium | 35 g/L |
| Température | 55°C |
| pH | 9,5 |
| Densité de courant | J = 0,35 A/dm² |

Ce bain de référence commerciale E-55 a été fourni par la société Métalor Technologies, et son rendement est voisin de 100%.

Après environ 1 heure 30 minutes de dépôt, on obtient un dépôt d'or très adhérent d'une épaisseur de 20 µm. Le substrat revêtu est alors recuit sous un vide meilleur que 10⁻³ Pa à 900°C pendant 2 heures. Le revêtement est prêt. Sa microstructure est conforme à celle présentée sur la figure 2.

Cet alliage revêtu et un témoin nu sont oxydés à 800°C, corrodés en présence de phases condensées et, pour finir corrodés en présence de substance halogénée (chlorure de sodium).

Les résultats obtenus sont regroupés dans le tableau suivant :

| Type de test | Température | Nombre de cycles d'une heure | Δm/S (mg/cm²) Brut | Δm/S (mg/cm²) revêtu selon l'invention |
|---|---|---|---|---|
| Oxydation cyclée | 800°C | 1000 | 2,0 | 0,6 |
| Corrosion soufrée | 800°C | 1000 | -2,9 | 0,5 |
| Corrosion halogénée | 600°C | 5 grands cycles | -6,8 Substrat corrodé | -6,8 Substrat sain |

| | | | | |
|---|---|---|---|---|
| (Δm/S désigne la prise de masse par unité de surface) | | | | |

On constate que, quelle que soit la technique corrosive utilisée, le revêtement améliore nettement les propriétés environnementales de l'alliage en oxydation à haute température et en corrosion à chaud. Par contre, à défaut d'améliorer le comportement en corrosion halogénée, il ne le détériore pas. Les examens métallographiques post mortem montrent qu'en fait le revêtement reste intact quel que soit le type d'agression auquel il est soumis. Dans le cas de la corrosion halogénée, on constate même un enrichissement en or de la couche externe, signifiant ainsi que seuls les éléments titane et aluminium de la phase TiAlAu₃ sont éliminés sous forme d'halogénures volatils.

Cette déplétion est intéressante car elle signifie que l'élément protecteur n'est pas éliminé au cours des opérations d'oxydation, corrosion soufrée ou corrosion halogénée. De ce fait, après une simple désoxydation / désulfuration telle que pratiquée par l'homme de l'art, il suffit de refaire un recuit sous vide pour régénérer le revêtement. Naturellement cette opération de régénération est limitée dans le temps car, à terme, l'interdiffusion substrat - revêtement pourrait créer des porosités de type Kirkendall.

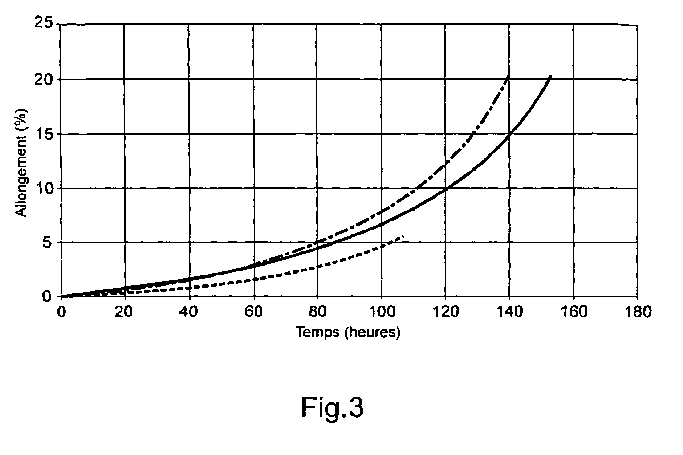

La figure 3 compare les propriétés mécaniques en fluage du TiAl 48Al-2Cr-2Nb sous 300 MPa à 700°C selon trois états : brut d'usinage (trait plein), brut de revêtement (trait et pointillé) et après 5 grands cycles en corrosion saline (trait pointillé). On constate que si le revêtement d'or diminue un peu les propriétés mécaniques de l'alliage intermétallique il permet, en contrepartie, de les préserver au mieux lorsque l'alliage est exposé aux conditions de service. De plus, il est important de constater que seule la durée du fluage tertiaire est modifiée selon l'état du matériau. En effet, sous cette contrainte, la durée du fluage secondaire (environ 23 heures) reste inchangée quel que soit l'état du matériau (brut, protégé ou protégé/corrodé).

### Exemple II

On se propose de protéger de la même manière un substrat d'aluminiure de titane α2-Ti₃Al. La procédure de revêtement est la même que celle décrite dans l'exemple I. Les résultats obtenus sont regroupés dans le tableau suivant :

| Type de test | Température | Nombre de cycles d'une heure | Δm/S (mg/cm²) Brut | Δm/S (mg/cm²) revêtu selon l'invention |
|---|---|---|---|---|
| Oxydation cyclée | 800°C | 60 | 2,7 | 0,6 1000 cycles : 7,1 |
| Corrosion soufrée | 800°C | 100 | -0,9 Substrat corrodé | 5,9 Substrat sain |

L'apport de ce revêtement sur ce type de substrat est spectaculaire, malgré une température de test trop élevée pour ce type de substrat. Ici aussi on constate au cours des examens post mortem que le revêtement subi une déplétion entraînant ainsi un enrichissement en or du revêtement.

### Exemple III

On procède comme dans l'exemple I mais le substrat Ti-48Al-2Cr-2Nb a subi un traitement thermique spécial modifiant sa microstructure pour la rendre totalement lamellaire. Cette microstructure permet d'améliorer les propriétés mécaniques de cet alliage.

On le protège avec une couche d'or de 20 µm obtenue selon la procédure décrite dans l'exemple I (dépôt + recuit sous vide à 900°C). Les résultats obtenus sont regroupés dans le tableau suivant :

| Type de test | Température | Nombre de cycles d'une heure | Δm/S (mg/cm²) Brut | Δm/S (mg/cm²) revêtu selon l'invention |
|---|---|---|---|---|
| Oxydation cyclée | 800°C | 1000 | 1,9 | 1,8 |
| Corrosion soufrée | 800°C | 1000 | -1,5 | 3,9 |
| Corrosion halogénée | 600°C | 5 grands cycles | -8,0 Substrat corrodé | -9,3 Substrat sain |

On constate que l'apport de ce revêtement sur ce type de substrat est important, apport confirmé par l'examen des microstructures qui montrent que la phase TiAlAu₃ est encore présente sur toute l'éprouvette à l'exception de celle ayant subi de la corrosion halogénée où un enrichissement en or par déplétion est constaté.

## Revendications

1. Procédé pour protéger la surface d'un substrat en alliage intermétallique à base d'aluminiure de titane contre la corrosion,
**caractérisé en ce qu'**il comprend les opérations suivantes :
a) préparer un substrat formé dudit alliage intermétallique ;
b) déposer un revêtement d'or sur la surface à protéger du substrat ;
c) soumettre le substrat ainsi muni du revêtement d'or à un recuit dans des conditions contrôlées pour provoquer une diffusion limitée de l'or dans la surface à protéger.

2. Procédé selon la revendication 1, **caractérisé en ce que** ledit alliage intermétallique est choisi parmi les alliages à base de γ-TiAl et les alliages à base de α-Ti₃Al.

3. Procédé selon l'une des revendications 1 et 2, **caractérisé en ce que** l'opération de préparation a) comprend un pré-traitement de la surface à protéger par un sablage, puis un traitement par au moins une attaque acide suivie d'un rinçage.

4. Procédé selon l'une des revendications 1 à 3, **caractérisé en ce que** l'opération de dépôt b) est réalisée par voie électrolytique à partir d'un bain de dorage.

5. Procédé selon la revendication 4, **caractérisé en ce que** le bain de dorage comprend une solution de sulfite de sodium contenant de l'or métallique.

6. Procédé selon l'une des revendications 1 à 5, **caractérisé en ce que** l'opération de dépôt b) est réalisée dans des conditions telles que le revêtement d'or présente une épaisseur d'au moins 2,5 µm, de préférence comprise entre 20 et 40 µm.

7. Procédé selon l'une des revendications 1 à 6, **caractérisé en ce que** l'opération de recuit c) est effectuée à haute température et sous pression réduite pour former des phases TiAlAu3, TiAlAu2 et TiAlAu.

8. Procédé selon la revendication 7, **caractérisé en ce que** l'opération de recuit c) est effectuée à une température comprise entre 850 et 1050°C, de préférence d'environ 900°C et sous un vide meilleur que 10⁻³ Pa.

9. Procédé selon l'une des revendications 7 et 8, **caractérisé en ce que** l'opération de recuit c) est effectuée sous un vide meilleur que 10⁻³ Pa.

10. Procédé selon l'une des revendications 1 à 9, **caractérisé en ce qu'**il comprend une opération supplémentaire consistant à :
d) déposer sur le revêtement d'or formant sous-couche un revêtement additionnel d'un autre matériau pour servir de protection contre l'érosion.

11. Procédé selon la revendication 10, **caractérisé en ce que** cet autre matériau est un métal tel que l'or pur ou un autre métal ne formant pas d'oxydes, ni de sulfures ou d'halogénures, comme le platine, le palladium, l'osmium, le rhodium, l'iridium et le ruthénium.

12. Procédé selon la revendication 10, **caractérisé en ce** cet autre matériau est une céramique à base d'oxydes, de carbures, ou de nitrures.

13. Procédé selon l'une des revendications 1 à 12, **caractérisé en ce qu'**il comprend l'opération ultérieure consistant à effectuer un nouveau recuit sous vide pour régénérer le revêtement d'or en cas de corrosion halogénée.

14. Procédé selon la revendication 13, **caractérisé en ce que** la corrosion halogénée se traduit par une déplétion par élimination des halogénures volatils tels que AlCl₃ ou AlF₃, TiCl₄ ou TiF₄.

15. Pièce comportant un substrat en alliage intermétallique à base d'aluminiure de titane dont une surface a été protégée contre la corrosion par un procédé selon l'une des revendications 1 à 14.

16. Pièce selon la revendication 15, destinée à une turbine à gaz, en particulier un moteur aéronautique.

## Claims

1. Process for protecting the surface of a substrate of intermetallic alloy with a base of titanium aluminide against corrosion, **characterised in that** it comprises the following operations:
a) prepare a substrate formed of the said intermetallic alloy;
b) deposit a coating of gold on the surface of the substrate to be protected;
c) subject the substrate so equipped with the gold coating to annealing in controlled conditions in order to bring about limited diffusion of the gold into the surface to be protected.

2. Process according to claim 1, **characterised in that** the intermetallic alloy is selected from alloys with a base of γ-TiAl and alloys with a base of α2-Ti₃Al.

3. Process according to either of claims 1 or 2, **characterised in that** the operation of preparation a) comprises pre-treatment of the surface to be protected by sand-blasting, then treatment by at least one acid etching stage followed by rinsing.

4. Process according to anyone of claims 1 to 3, **characterised in that** the operation of deposition b) is carried out electrolytically with a gilding bath.

5. Process according to claim 4, **characterised in that** the gilding bath comprises a solution of sodium sulphite containing metallic gold.

6. Process according to anyone of claims 1 to 5, **characterised in that** the deposition operation b) is carried out in conditions such that the gold coating has a thickness of at least 2.5 µm, preferably of between 20 and 40 µm.

7. Process according to anyone of claims 1 to 6, **characterised in that** the annealing operation c) is carried out at high temperature and under reduced pressure to form the phases TiAlAu₃, TiAlAu₂ and TiAlAu.

8. Process according to claim 7, **characterised in that** the annealing operation c) is carried out at a temperature of between 850 and 1050°C, preferably about 900°C and under a vacuum of better than 10⁻³ Pa.

9. Process according to either of claims 7 or 8, **characterised in that** the annealing operation c) is carried out under a vacuum of better than 10⁻³ Pa.

10. Process according to one of claims 1 to 9, **characterised in that** it comprises a supplementary operation consisting in:
d) depositing on the gold coating forming an underlayer an additional coating of another material to act as protection against erosion.

11. Process according to claim 10, **characterised in that** this other material is a metal such as pure gold or another metal not forming oxides nor sulphides nor halides, such as platinum, palladium, osmium, rhodium, iridium and ruthenium.

12. Process according to claim 10, **characterised in that** this other material is a ceramic with a base of oxides, carbides, or nitrides.

13. Process according to anyone of claims 1 to 12, **characterised in that** it comprises a further operation consisting of carrying out a repeated anneal under vacuum in order to regenerate the gold coating in the case of halogenated corrosion.

14. Process according to claim 13, **characterised in that** the halogenated corrosion is manifested by depletion by elimination of the volatile halides such as AlCl₃ or AlF₃, TiCl₄ or TiF₄.

15. Part comprising a substrate of intermetallic alloy with a base of titanium aluminide one surface of which was protected against corrosion by a process according to anyone of claims 1 to 14.

16. Part according to claim 15, intended for a gas turbine, in particular an aircraft engine.

## Patentansprüche

1. Verfahren zum Schützen der Oberfläche eines Substrats aus intermetallischer Legierung auf der Basis von Titanaluminid gegen die Korrosion,
**dadurch gekennzeichnet, dass** es die folgenden Schritte aufweist:
a) Vorbereiten eines Substrats gebildet aus der intermetallischen Legierung;
b) Aufbringen eines Goldüberzugs auf die zu schützende Oberfläche des Substrats;
c) Unterwerfen des mit dem Goldüberzug versehenen Substrats einem Glühen bei kontrollierten Bedingungen, um eine begrenzte Diffusion des Goldes in die zu schützende Oberfläche hervorzurufen.

2. Verfahren nach Anspruch 1, **dadurch gekennzeichnet, dass** die intermetallische Legierung ausgewählt wird aus den Legierungen auf der Basis von γ-TiAl und den Legierungen auf der Basis von α2-Ti₃Al.

3. Verfahren nach Anspruch 1 oder 2, **dadurch gekennzeichnet, dass** der Schritt der Vorbereitung a) eine Vorbehandlung der zu schützenden Oberfläche durch ein Sandstrahlen, sodann eine Behandlung durch wenigstens einen Säureangriff gefolgt von einer Spülung umfasst.

4. Verfahren nach einem der Ansprüche 1 bis 3, **dadurch gekennzeichnet, dass** der Schritt der Aufbringung b) auf elektrolytischem Weg ausgehend von einem Vergoldungsbad verwirklicht wird.

5. Verfahren nach Anspruch 4, **dadurch gekennzeichnet, dass** das Vergoldungsbad eine Lösung von Natriumsulfit aufweist, die metallisches Gold enthält.

6. Verfahren nach einem der Ansprüche 1 bis 5, **dadurch gekennzeichnet, dass** der Schritt der Aufbringung b) unter Bedingungen derart verwirklicht wird, dass der Goldüberzug eine dicke von wenigstens 2,5 µm, vorzugsweise zwischen 20 und 40 µm aufweist.

7. Verfahren nach einem der Ansprüche 1 bis 6, **dadurch gekennzeichnet, dass** der Schritt des Glühens c) bei hoher Temperatur und unter reduziertem Druck durchgeführt wird, um die Phasen TiAlAu3, TiAlAu2 und TiAlAu zu bilden.

8. Verfahren nach Anspruch 7, **dadurch gekennzeichnet, dass** der Schritt des Glühens c) bei einer Temperatur zwischen 850 und 1.050°C, vorzugsweise bei ungefähr 900°C und in einem Vakuum besser als 10⁻³ Pa durchgeführt wird.

9. Verfahren nach Anspruch 7 oder 8, **dadurch gekennzeichnet, dass** der Schritt des Glühens c) in einem Vakuum besser als 10⁻³ Pa durchgeführt wird.

10. Verfahren nach einem der Ansprüche 1 bis 9, **dadurch gekennzeichnet, dass** es einen zusätzlichen Schritt aufweist, der besteht aus:
d) Aufbringen auf den Goldüberzug, der eine Unterschicht bildet, einen zusätzlichen Überzug eines anderen Materials, der als Schutz gegen die Erosion dient.

11. Verfahren nach Anspruch 10, **dadurch gekennzeichnet, dass** dieses andere Material ein Metall ist, wie beispielsweise pures Gold oder ein anderes Metall, das weder Oxide, noch Sulfide oder Halogenide bildet, wie das Platin, das Palladium, das Osmium, das Rhodium, das Iridium und das Ruthenium.

12. Verfahren nach Anspruch 10, **dadurch gekennzeichnet, dass** dieses andere Material eine Keramik auf der Basis von Oxiden, Karbiden oder Nitriden ist.

13. Verfahren nach einem der Ansprüche 1 bis 12, **dadurch gekennzeichnet, dass** es den weiteren Schritt aufweist, der darin besteht, ein erneutes Glühen im Vakuum durchzuführen, um den Goldüberzug im Falle einer halogenierten Korrosion zu regenerieren.

14. Verfahren nach Anspruch 13, **dadurch gekennzeichnet, dass** die halogenierte Korrosion sich als eine Verknappung darstellt, durch Entfernen der flüchtigen Halogenide wie das AlCl₃ oder AlF₃, TiCl₄ oder TiF₄.

15. Teil mit einem Substrat aus intermetallischer Legierung auf der Basis von Titanaluminid von dem eine Oberfläche gegen die Korrosion durch ein Verfahren nach einem der Ansprüche 1 bis 14 geschützt wurde.

16. Teil nach Anspruch 15, bestimmt für eine Gasturbine, insbesondere einem Flugzeugmotor.
